**Europäisches Patentamt**

**European Patent Office**

**Office européen des brevets**

(19)

(11) Publication number: **0 104 021**
**B1**

(12) # EUROPEAN PATENT SPECIFICATION

(45) Date of publication of patent specification: **17.12.86**

(21) Application number: **83305204.6**

(22) Date of filing: **07.09.83**

(51) Int. Cl.⁴: **B 01 J 2/04, F 26 B 25/22, C 05 C 9/00, G 05 D 22/02, B 01 D 1/00**

(54) Controlling moisture content of prilled products.

(30) Priority: **16.09.82 US 419111**

(43) Date of publication of application:
**28.03.84 Bulletin 84/13**

(45) Publication of the grant of the patent:
**17.12.86 Bulletin 86/51**

(84) Designated Contracting States:
**DE FR GB IT**

(56) References cited:
**EP-A-0 033 144**
**US-A-1 734 260**
**US-A-1 782 054**
**US-A-2 653 391**
**US-A-3 261 105**

(73) Proprietor: **THE BABCOCK & WILCOX COMPANY**
**1010 Common Street P.O. Box 60035**
**New Orleans Louisiana 70160 (US)**

(72) Inventor: **Agarwal, Suresh C.**
**26011 Lakeshore Boulevard**
**Euclid, OH 44132 (US)**

(74) Representative: **Cotter, Ivan John et al**
**D. YOUNG & CO. 10 Staple Inn**
**London WC1V 7RD (GB)**

Courier Press, Leamington Spa, England.

# Description

This invention relates in general to the manufacture of prilled products (e.g. prilled fertiliser products), and in particular to apparatus for and methods of controlling the moisture content of prilled products (e.g. urea prills).

Fertiliser manufacturing processes are known in which concentrated solution, for example a concentrated urea solution, is supplied from an evaporator to feed a prilling tower. The solution is typically at a concentration of 95% or greater and supplied to the prilling tower by spraying the solution at the top of the tower through multiple jets or distributors. Atmospheric air flow is supplied in countercurrent fashion to the spray whereby the concentrated solution is dried into the final prilled product.

U.S. Patent No. US—A—4 219 589 to Niks *et al* discloses a process for urea granulation wherein the urea granules are prepared by spraying an aqueous urea solution into a fertiliser bed of urea nuclei. In this manner the aqueous urea solution coats the nuclei and crystallises thereon to form granules or prills having a desired size. This patent is directed entirely to the formation of such granules having a specific size and does not disclose any means for controlling the inlet air temperature and humidity so as to maintain a proper moisture content for the resulting urea granules or prills.

U.S. Patent No. US—A—3 287 408 to Veltman is directed to a process for rendering urea prills free-flowing and non-caking. This process entails agitating a bed of urea prills and a specific contact zone and maintaining the bed at a specific temperature in order to dry the prills.

U.S. Patent No. US—A—1 734 260 to Lamont and U.S. Patent No. US—A—1 782 054 to Uhl disclose arrangements for controlling the moisture content of a spray dried product, which arrangements include a vessel, air supply means having a controllable flow rate and product supply means having a controllable flow rate.

Other U.S. Patents which are relevant in understanding the background of the present invention are No. US—A—2 653 391 to Edmunds, Jr. and No. US—A—3 261 105 to Mullen, Jr.

A problem which remains in such manufacturing processes is that a close control of moisture content in the product is not maintained. Moisture content for prilled urea is of key significance for the use of the product as fertiliser. This is because a moisture content greater than a desired product specification will result in the formation of lumps of urea prills. Consequently, efficiency in a packing operation is reduced due to clogging and the effectiveness of the fertiliser is reduced due to a reduction in surface area which is available for chemical reaction.

A moisture content less than a desired product specification may result in cracks formed on the prill surface which increases surface area for water absorption during packaging, shipping etc.

This ultimately reduces the effectiveness of the fertiliser.

If the moisture content in the finished product is either too great or too low, the only available actions are the constant maintenance of packing operation equipment to prevent clogging, the formation of a solution of the prilled product and the re-prilling thereof, or the disposal of the off-specification product by selling at a lower rate or simply discarding it.

The present invention provides a method and apparatus which closely controls the moisture content of prilled products (for example, urea prills) by controlling the flow rate of air into a vessel (for example a prilling tower).

According to one aspect thereof, the present invention provides apparatus for controlling the moisture content of a prilled product produced by air drying a spray of the product in a vessel having air supply means for supplying air at an air flow rate to the vessel and product supply means for supplying the product at a product flow rate to the vessel;

the apparatus being characterised by:

first moisture content means for providing a signal corresponding to an input product moisture content;

second moisture content means for providing a signal corresponding to an input air moisture content;

third moisture content means for providing a signal corresponding to an output air moisture content;

· air control means connected to the air supply means for controlling the air flow rate; and

a control circuit connected to the first, second and third moisture content means and to the air control means, the control circuit being operable to establish an air flow rate needed for a selected prilled product moisture content according to the equation:

$$A_i = \left[ \frac{(\psi_F - \psi_p)}{(1 - \psi_p)} \right] \left[ \frac{(1 - \psi_o)}{(\psi_o - \psi_i)} \right] F.$$

According to a preferred form of apparatus embodying the invention and described hereinbelow, temperature and humidity values are taken at various locations in the process and are used to calculate a desired air input flow rate for a specified and desired moisture content of the produced prills. A feature of the preferred apparatus comprises means for calculating the moisture content of the input and output air as a function of the input air temperature and average temperature within the vessel (e.g. prilling tower). The preferred apparatus, for controlling the moisture content of prilled products, in particular urea prills, is simple in design, rugged in construction and economical to manufacture.

The preferred apparatus determines the moisture content of the product flow to the vessel, the moisture content of output air from the vessel, selects a desired moisture content for the prilled product, and controls the air flow rate to the prilling tower according to an algorithm which is a function of the moisture contents for the product, the input and output air flows and the product flow rate.

According to yet another aspect thereof, the invention provides a method of controlling the moisture content $(\psi_p)$ of a prilled product produced by air drying a spray of the product in a vessel which receives a flow of air for drying the spray and a flow of the product, the method being characterised by:

sensing the input air flow rate into the vessel;

obtaining a value corresponding to a moisture content of the product $(\psi_F)$ flowing into the vessel;

selecting a desired moisture content $(\psi_p)$ for the prilled product;

obtaining a value corresponding to the moisture content $(\psi_i)$ of input air to the vessel;

obtaining a value corresponding to a moisture content $(\psi_o)$ of air leaving the vessel;

calculating a required input air flow rate $(A_i)$ according to the equation:

$$A_i = [\frac{(\psi_F - \psi_p)}{(1 - \psi_p)}] \quad [\frac{(1 - \psi_o)}{(\psi_o - \psi_i)}] \ F; \ and$$

controlling the flow of input air to the vessel to meet the required input air flow rate $(A_i)$.

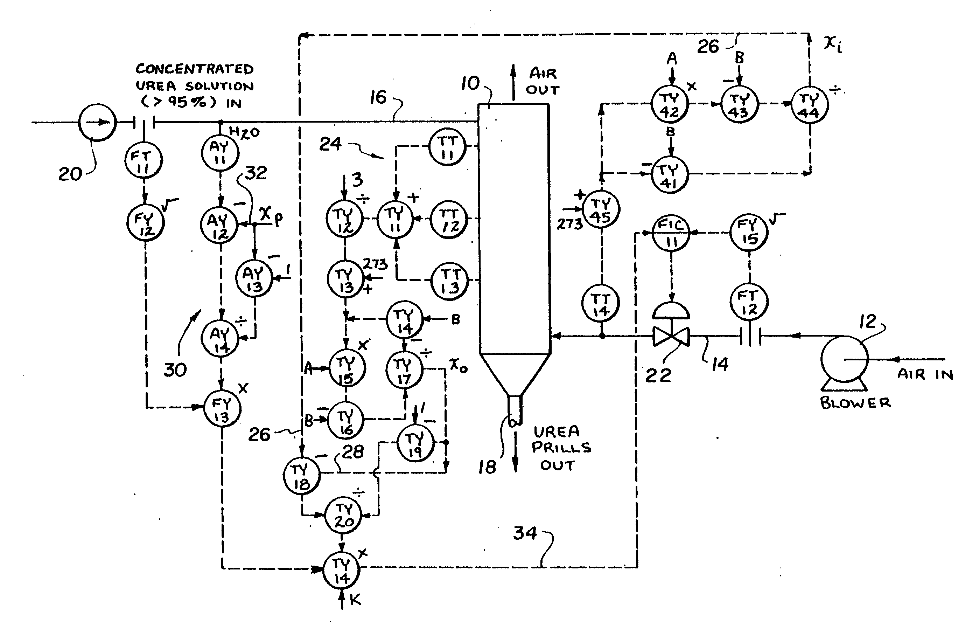

The invention will now be further described, by way of illustrative and non-limiting example, with reference to the accompanying drawing, the sole figure of which is a schematic representation of a preferred embodiment of the invention.

The drawing shows apparatus for controlling moisture content of prilled products, in particular urea prills, by drying a spray of product using a flow of atmospheric air. A prilling tower or vessel 10 is supplied with atmospheric air by a blower 12 over an air line 14. The line 14 is connected to the bottom of the tower 10. A product line 16 is connected to the top of the tower 10 and, by means of a schematically shown product supply pump 20, supplies liquid product, in this case an aqueous solution of urea, to the top of the tower 10. The spray of liquid product is exposed to a countercurrent flow of drying air and dried into pellets or prills which leave the bottom of the tower 10 at a prilled product output 18.

Connected to the air line 14 is an air flow valve 22 which is controlled by a controller FIC-11 to regulate the amount of drying air supplied to the tower 10. The flow of air is sensed by a flow transmitter FT-12. The flow of urea solution, which preferably has a concentration of 95% or higher and is supplied from an evaporator (not shown), is sensed by a flow transmitter FT-11. The moisture content of the aqueous urea solution product flow is determined in a hygrometer unit AY-11 which provides a constant value of the product flow moisture content.

The temperature of the input air in the line 14 is monitored by a temperature sensor or thermocouple TT-14 and the average temperature within the vessel 10 is monitored by temperature averaging means 24. The temperature averaging means 24 include for example three temperature transmitters TT-11, TT-12 and TT-13 that take temperatures at various levels of the vessel 10. These temperatures are combined in a unit TY-11 and divided by three in a unit TY-12 to obtain an average value for the temperature within the vessel 10.

The remaining circuitry is utilised to achieve an algorithm wherein desired moisture content of the prilled product is controlled by controlling the flow rate of input air via the valve 22.

The analysis utilised to achieve the desired moisture content takes temperature and humidity quantities into account.

The symbols used herein have the following meanings:

$F$ = feed flow rate of the urea solution (product flow);

$\psi_F$ = water concentration in the urea feed solution;

$P$ = prilled product output stream flow rate;

$\psi_p$ = desired concentration of water in the prilled product;

$A_i$ = flow rate of the inlet air;

$A_o$ = flow rate of the outlet or effluent air;

$\psi_i$ = moisture content of the inlet air;

$\psi_o$ = moisture content of the outlet air; and

$T_i$ = inlet air temperature.

For overall material balance, it is assumed that:

$$F + A_i = P + A_o \qquad (1)$$

and, for water balance, that:

$$F\psi_F + A_i\psi_i = A_o\psi_o + P\psi_p \qquad (2)$$

For urea balance it is assumed that:

$$F(1 - \psi_F) = P(1 - \psi_p) \qquad (3)$$

From equations (1), (2) and (3), the following can be obtained:

$$A_i = [\frac{(\psi_F - \psi_p)}{(\psi_o - \psi_i)}] \quad [\frac{(1 - \psi_o)}{(1 - \psi_p)}] \ F$$

$$\text{or,} \quad A_i = [\frac{(\psi_F - \psi_p)}{(1 - \psi_p)}] \quad [\frac{(1 - \psi_o)}{(\psi_o - \psi_i)}] \ F \qquad (4)$$

Equation (4) give the desired air flow rate for a given moisture content of the prilled product as long as all other variables can be either measured or inferred.

It is difficult to measure the moisture content $(\psi_o)$ of the effluent or outlet air. Nevertheless, it can safely be assumed that the maximum moisture content of the effluent air is limited to saturated air. It can then be shown that:

$$\psi_o = \frac{AT - B}{B - T} \qquad (5)$$

where A and B are constants and T is the average tower temperature in K.

Similarly,

$$\psi_i = \frac{AT_i - B}{B - T_i} \qquad (6)$$

From equations (4), (5) and (6), the flow rate of inlet air ($A_i$) can be determined for a specified moisture content in the product ($\psi_p$) and measured values of the variables $\psi_F$, $T_i$, T and F.

Functionally, the desired inlet air flow is given by:

$$A_i = KG(\psi_F, \psi_p, T_i, T, F) \qquad (20)$$

where:

K=a multiplicative constant accounting consistency of units; and

G=a function depending of the variables $\psi_F$, $\psi_p$, $T_i$, T and F.

An exact expression can be obtained by combining equations (4), (5) and (6).

The drawing shows a control scheme for the prilling tower 10 based on the above analysis. The implementation shown herein is a conventional electronic instrument and control system. Nevertheless, it can be implemented easily via a control computer system.

The input air temperature from the transmitter TT-14 which is in degrees Celsius, is converted in a unit TY-45 to Kelvins by adding 273 thereto. This brings the temperature to the thermodynamic scale. The inlet air moisture content $\psi_i$ is provided on a line 26 after being calculated according to equation (6) in units TY-41, TY-42, TY-43 and TY-44. These units all have the functions and manipulate the values as shown in the drawing.

The line 26 is connected to an element TY-18 which receives the output air moisture content value $\psi_o$ from a line 28 and generates the factor ($\psi_o - \psi_i$). An element TY-19 establishes the factor (1 − $\psi_o$) and an element TY-20 divides this factor by the factor ($\psi_o - \psi_i$) to form the middle factor of equation (4). The average temperature value $T_i$ is calculated by the temperature averaging means 24 which includes an element TY-13 for converting the temperature into Kelvins and units TY-14, TY-15, TY-16 and TY-17 that are operable to solve equation (5). The product flow rate F is determined from a function generator FY-12 and multiplied with the first factor of equation (4), which is generated by means generally designated 30. The desired and thus known prill product moisture content $\psi_p$ is supplied over a line 32 to a subtracting unit AY-12 which subtracts the value from the moisture content value $\psi_F$ for the product as detected by the hygrometer unit AY-11. The denominator of the first factor in equation (4) is established in a unit AY-13 and division is achieved in a unit AY-14. The first and last factors of equation (4) are multiplied together in a multiplication unit FY-13. A multiplication unit FY-14 multiplies the three factors of equation (4) together, as well as multiplying this value by the constant K to produce the desired air flow value $A_i$ for input air. This value is supplied over a line 34 to the controller FIC-11 which compares this desired input air value with the known value provided over the flow transmitter FT-12 and a function generator FY-15.

Thus, according to the above-described arrangement, the said point is chosen to be desired moisture content $\psi_p$ and the control parameter is the air input flow rate $A_i$.

## Claims

1. Apparatus for controlling the moisture content ($\psi_p$) of a prilled product produced by air drying a spray of the product in a vessel (10) having air supply means (12, 14) for supplying air at an air flow rate ($A_i$) to the vessel (10) and product supply means (16, 20) for supplying the product at a product flow rate (F) to the vessel (10);

the apparatus being characterised by:

first moisture content means (AY-11) for providing a signal corresponding to an input product moisture content ($\psi_F$);

second moisture content means for providing a signal corresponding to an input air moisture content ($\psi_i$);

third moisture content means for providing a signal corresponding to an output air moisture content ($\psi_o$);

air control means (FIC-11, 22) connected to the air supply means (12, 14) for controlling the air flow rate; and

a control circuit connected to the first, second and third moisture content means and to the air control means (FIC-11, 22), the control circuit being operable to establish an air flow rate ($A_i$) needed for a selected prilled product moisture content according to the equation:

$$A_i = \left[\frac{(\psi_F - \psi_p)}{(1 - \psi_p)}\right] \left[\frac{(1 - \psi_o)}{(\psi_o - \psi_i)}\right] F.$$

2. Apparatus according to Claim 1, including a first temperature sensor (TT-14) for sensing a temperature ($T_i$) of input air supplied by the air supply means (12, 14), the second moisture content means comprising a circuit (TY-41, TY-42, TY-43, TY-44) for calculating the input air moisture content ($\psi_i$) as a function of the input air temperature ($T_i$).

3. Apparatus according to Claim 1 or Claim 2, wherein the third moisture content means comprises vessel temperature sensor means (24) for obtaining a value for an average temperature (T) in the vessel (10) and a circuit (TY-14, TY-15, TY-16, TY-17), for calculating the output air mois-

ture content ($\psi_o$) as a function of the average vessel temperature (T).

4. Apparatus according to Claim 3, wherein the vessel (10) comprises a prilling tower, and the vessel temperature sensor means (24) comprises a plurality of temperature sensors (TT-11, TT-12, TT-13) connected at spaced locations along a height of the tower (10) and an averaging circuit (TY-11, TY-12) connected to the plurality of temperature sensors for obtaining the average vessel temperature (T).

5. Apparatus according to any one of the preceding claims, wherein the vessel (10) comprises a prilling tower, the air supply means (12, 14) is connected to a lower end of the tower (10) for supplying an upstream of input air, and the product supply means (16, 20) is connected to an upper end of the tower (10) for supplying product in countercurrent flow relationship to the input air.

6. Apparatus according to Claim 5, wherein the product supply means (16, 20) is capable of conveying a concentrated aqueous solution of urea.

7. Apparatus according to Claim 6, wherein the first moisture content means (AY-11) comprises a device for sensing the moisture content ($\psi_F$) in an aqueous solution of urea.

8. Apparatus according to any one of the preceding claims, wherein the first moisture content means (AY-11) is operative to provide a constant value of product flow moisture content ($\psi_p$) to the control circuit.

9. A method of controlling the moisture content ($\psi_p$) of a prilled product produced by air drying a spray of the product in a vessel (10) which receives a flow of air for drying the spray and a flow of the product, the method being characterised by:

sensing the input air flow rate into the vessel (10);

obtaining a value corresponding to a moisture content of the product ($\psi_F$) flowing into the vessel (10);

selecting a desired moisture content ($\psi_p$) for the prilled product;

obtaining a value corresponding to the moisture content ($\psi_i$) of input air to the vessel;

obtaining a value corresponding to a moisture content ($\psi_o$) of air leaving the vessel;

calculating a required input air flow rate ($A_i$) according to the equation:

$$A_i = \left[\frac{(\psi_F - \psi_p)}{(1-\psi_p)}\right]\left[\frac{(1-\psi_o)}{(\psi_o - \psi_i)}\right] F; \text{ and}$$

controlling the flow of input air to the vessel to meet the required input air flow rate ($A_i$).

10. A method according to Claim 9, wherein the vessel (10) is a prilling tower, the input air is supplied to a lower end of the tower, the product flow is supplied to an upper end of the tower, and the product flow comprises a concentrated aqueous solution of urea.

**Patentansprüche**

1. Vorrichtung zur Steuerung des Feuchtigkeitsgehaltes ($\psi_p$) eines granulierten Produktes, das durch Lufttrocknen eines Sprühnebels des Produktes in einem Behälter (10) mit einer Luftzufuhreinrichtung (12, 14) zum Zuführen von Luft mit einer Luftströmungsgeschwindigkeit ($A_i$) zu dem Behälter (10) und einer Produktzufuhreinrichtung (16, 20) zum Zuführen des Produktes mit einer Produkströmungsgeschwindigkeit (F) zu dem Behälter (10) hergestellt wurde, gekennzeichnet durch

eine erste Feuchtigkeitsgehalteinrichtung (AY-11) zur Lieferung eines Signals entsprechend einem Produkteingangs-Feuchtigkeitsgehalt ($\psi_F$),

eine zweite Feuchtigkeitsgehalteinrichtung zur Lieferung eines Signals entsprechend einem Lufteingangs-Feuchtigkeitsgehalt ($\psi_i$),

eine dritte Feuchtigkeitsgehalteinrichtung zur Lieferung eines Signals entsprechend einem Luftausgangs-Feuchtigkeitsgehalt ($\psi_o$),

eine Luftsteuereinrichtung (FIC-11, 22), die mit der Luftzufuhreinrichtung (12, 14) verbunden ist, um die Luftströmungsgeschwindigkeit zu steuern, und

einen mit der ersten, zweiten und dritten Feuchtigkeitsgehalteinrichtung, und der Luftsteuereinrichtung (FIC-11, 22) verbundenen Steuerkreis, wobei der Steuerkreis so arbeitet, daß er eine Luftströmungsgeschwindigkeit ($A_i$) ergibt, die für den Feuchtigkeitsgehalt eines ausgewählten granulierten Produktes gemäß der Gleichung

$$A_i = \left[\frac{(\psi_F - \psi_p)}{(1-\psi_p)}\right]\left[\frac{(1-\psi_o)}{(\psi_o - \psi_i)}\right] F.$$

benötigt wird.

2. Vorrichtung nach Anspruch 1 mit einer ersten Temperaturabfühleinrichtung (TT-14) zum Abfühlen einer Temperatur ($T_I$) von durch die Luftzufuhreinrichtung (12, 14) zugeführte Eingangsluft, wobei die zweite Feuchtigkeitsgehalteinrichtung einen Kreis (TY-41, TY-42, TY-43, TY-44) zum Berechnen des Lufteingangs-Feuchtigkeitsgehaltes ($\psi_i$) als eine Funktion der Lufteingangstemperatur ($T_I$) aufweist.

3. Vorrichtung nach Anspruch 1 oder Anspruch 2, bei der die dritte Feuchtigkeitsgehalteinrichtung eine Behältertemperatur-Abfühleinrichtung (24), um einen Wert für eine mittlere Temperatur (T) in dem Behälter (10) zu erhalten, und einen Kreis (TY-14, TY-15, TY-16, TY-17) zum Berechnen des Luftausgangs-Feuchtigkeitsgehaltes ($\psi_o$) als eine Funktion der mittleren Behältertemperatur (T) aufweist.

4. Vorrichtung nach Anspruch 3, bei der der Behälter (10) einen Prillturm besitzt und die Behältertemperaturabfühleinrichtung (24) mehrere Temperaturabfühleinrichtungen (TT-11, TT-12, TT-13), die mit voneinander beabstandeten Stellen entlang einer Höhe des Turmes (10) verbunden sind, und einen Mittelungskreis (TY-11, TY-12), der mit den mehreren Temperaturabfühleinrichtungen verbunden ist, um die mittlere Behältertemperatur (T) zu bekommen, aufweist.

5. Vorrichtung nach einem der vorausgehenden Ansprüche, bei der der Behälter (10) einen Prillturm besitzt, die Luftzufuhreinrichtung (12, 14) mit einem unteren Ende des Turmes (10) verbunden ist, um einen aufwärts gerichteten Strom von Eingangsluft zuzuführen, und die Produktzufuhreinrichtung (16, 20) mit einem oberen Ende des Turmes (10) verbunden ist, um Produkt in Gegenstromflußbeziehung zu der Eingangsluft zuzuführen.

6. Vorrichtung nach Anspruch 5, bei der die Produktzufuhreinrichtung (16, 20) in der Lage ist, einen konzentrierte wäßrige Harnstofflösung zu befördern.

7. Vorrichtung nach Anspruch 6, bei der die erste Feuchtigkeitsgehalteinrichtung (AY-11) eine Einrichtung zum Abfühlen des Feuchtigkeitsgehaltes ($\psi_F$) in einer wäßrigen Harnstofflösung aufweist.

8. Vorrichtung nach einem der vorausgehenden Ansprüche, bei der die erste Feuchtigkeitsgehalteinrichtung (AY-11) so arbeitet, daß sie einen konstanten Wert für den Feuchtigkeitsgehalt ($\psi_p$) des Produktstromes an den Steuerkreis liefert.

9. Verfahren zur Steuerung des Feuchtigkeitsgehaltes ($\psi_p$) eines granulierten Produktes, das durch Lufttrocknen einer Sprühflüssigkeit des Produktes in einem Behälter (10), der einen Luftstrom zum Trocknen der Sprühflüssigkeit und einen Strom des Produktes aufnimmt, hergestellt wird, dadurch gekennzeichnet, daß man die Lufteingangsströmungsgeschwindigkeit in den Behälter (10) abfühlt,

einen Wert entsprechend einem Feuchtigkeitsgehalt des Produktes ($\psi_F$), das in den Behälter (10) strömt, erhält,

einen erwünschten Feuchtigkeitsgehalt ($\psi_p$) für das granulierte Produkt auswählt,

einen Wert entsprechend dem Feuchtigkeitsgehalt ($\psi_i$) der Eingangsluft zu dem Behälter erhält,

einen Wert entsprechend einem Feuchtigkeitsgehalt ($\psi_o$) der den Behälter verlassenden Luft erhält,

die erforderliche Lufteingangsströmungsgeschwindigkeit ($A_i$) gemäß der Gleichung

$$A_i = \left[\frac{(\psi_F-\psi_p)}{(1-\psi_p)}\right]\left[\frac{(1-\psi_o)}{(\psi_o-\psi_i)}\right]F$$

berechnet und
den Strom der Eingangsluft zu dem Behälter so steuert, daß sie der erforderlichen Lufteingangsströmungsgeschwindigkeit ($A_i$) entspricht.

10. Verfahren nach Anspruch 9, bei dem der Behälter (10) ein Prillturm ist, die Eingangsluft am unteren Ende des Turmes zugeführt wird, der Produktstrom einem oberen Ende des Turmes zugeführt wird und der Produktstrom eine konzentrierte wäßrige Harnstofflösung umfaßt.

**Revendications**

1. Appareil de commande du contenu en humidité ($\psi_p$) d'un produit en granulés obtenu par un séchage à l'air d'une pulvérisation du produit dans une enceinte (10) comprenant un moyen d'alimentation en air (12, 14) pour fournir de l'air à un certain débit ($A_i$) à l'enceinte (10) et un moyen d'alimentation en produit (16, 20) pour fournir le produit à un certain débit (F) vers l'enceinte (10);
cet appareil étant caractérisé par:
un premier moyen de contenu en humidité (AY-11) pour fournir un signal correspondant à un contenu en humidité du produit d'entrée ($\psi)_F$;
un second moyen de contenu en humidité pour fournir un signal correspondant à un contenu en humidité de l'air d'entrée ($\psi_i$);
un troisième moyen de contenu en humidité pour fournir un signal correspondant à un contenu en humidité de l'air de sortie ($\psi_o$);
un moyen de commande d'air (FIC-11, 22) connecté au moyen d'alimentation en air (12, 14) pour commander le débit d'air;
un circuit de commande connecté aux premier, second et troisième moyens de contenu en humidité et au moyen de commande d'air (FIC-11, 22), le circuit de commande étant actionnable pour établir un débit d'air ($A_i$) nécessaire pour un contenu en humidité de produit en granulés choisi selon l'équation:

$$A_i = \left[\frac{(\psi_F-\psi_p)}{(1-\psi_p)}\right]\left[\frac{(1-\psi_o)}{(\psi_o-\psi_i)}\right]F$$

2. Appareil selon la revendication 1, comprenant un premier détecteur de température (TT-14) pour détecter une température ($T_i$) de l'air d'entrée fourni par le moyen d'alimentation en air (12, 14), le second moyen de contenu en humidité comprenant un circuit (TY-41, TY-42, TY-43, TY-44) pour calculer le contenu en humidité de l'air d'entrée ($\psi_i$) en fonction de la température de l'air d'entrée ($T_i$);

3. Appareil selon l'une des revendications 1 ou 2, caractérisé en ce que le troisième moyen de contenu en humidité comprend un moyen de détecteur de température d'enceinte (24) pour fournir une valeur pour une température moyenne (T) dans l'enceinte (10) et un circuit (TY-14, TY-15, TY-16, TY-17) pour calculer le contenu en humidité de l'air ($\psi_o$) en fonction de la température moyenne (T) de l'enceinte.

4. Appareil selon la revendication 3, caractérisé en ce que l'enceinte (10) comprend une tour à granulés et en ce que le moyen détecteur de température d'enceinte (24) comprend une pluralité de détecteurs de température (TT-11, TT-12, TT-13) connectés à des emplacements espacés selon la hauteur de la tour (10) et un circuit de calcul de moyenne (TY-11, TY-12) connecté à la pluralité de détecteurs de température pour fournir la température moyenne (T) de l'enceinte.

5. Appareil selon l'une quelconque des revendications précédentes, dans lequel l'enceinte (10) comprend une tour à granulés, le moyen d'alimentation en air (12, 14) est connecté à une partie inférieure de la tour (10) pour fournir un flux montant d'air d'entrée, et le moyen d'alimentation en produit (16, 20) est connecté à une extrémité supérieure de la tour (10) pour fournir du produit en relation de contre-courant par rapport à l'air d'entrée.

6. Appareil selon la revendication 5, caractérisé en ce que le moyen d'alimentation en produit (16, 20) peut transporter une solution aqueuse concentrée d'urée.

7. Appareil selon la revendication 6, caractérisé en ce que le premier moyen de contenu en humidité (AY-11) comprend un dispositif pour détecter le contenu en humidité ($\psi_F$) dans une solution aqueuse d'urée.

8. Appareil selon l'une quelconque des revendications précédentes, dans lequel le premier moyen de contenu en humidité (AY-11) agit pour fournir une valeur constante du contenu en humidité de flux de produit ($\psi_p$) vers le circuit de commande.

9. Procédé de commande du contenu en humidité ($\psi_p$) d'un produit en granulés produit par séchage à l'air d'une pulvérisation du produit dans une enceinte (10) qui reçoit un flux d'air pour sécher la pulvérisation et un flux de produit, ce procédé étant caractérisé par les étapes suivantes:

détecter le flux d'air d'entrée dans l'enceinte (10);

obtenir une valeur correspondant au contenu en humidité du produit ($\psi_F$) circulant dans l'enceinte (10);

choisir un contenu en humidité souhaité ($\psi_p$) pour le produit en granulés;

obtenir une valeur correspondant au contenu en humidité ($\psi_i$) de l'air d'entrée vers l'enceinte;

obtenir une valeur correspondant au contenu en humidité ($\psi_o$) de l'air quittant l'enceinte;

calculer un débit d'air d'entrée requis ($A_i$) selon l'équation:

$$A_i = \left[\frac{(\psi_F - \psi_p)}{(1 - \psi_p)}\right] \left[\frac{(1 - \psi_o)}{(\psi_o - \psi_i)}\right] F; \quad \text{et}$$

commander le flux d'air d'entrée vers l'enceinte pour satisfaire pour débit d'air requis ($A_i$).

10. Procédé selon la revendication 9, dans lequel l'enceinte (10) est une tour à granulés, l'air d'entrée est fourni à une extrémité inférieure de la tour, le débit de produit est fourni à une extrémité supérieure de la tour, et la circulation de produit comprend une solution aqueuse concentrée d'urée.